# EUROPÄISCHE PATENTANMELDUNG

(11) **EP 2 292 387 A1**
(43) Veröffentlichungstag der Anmeldung: **09.03.2011**
(21) Anmeldenummer: 10173396.2
(22) Anmeldetag: 19.08.2010
(51) Int. Cl.: B25J 5/00, G01B 21/00, G01B 21/04

(54) **Mobile Messvorrichtung**

(30) Priorität: 02.09.2009 DE 102009039812
(71) Anmelder: KUKA Roboter GmbH, 86165 Augsburg (DE)
(72) Erfinder: Santjohanser, Karina, 86316 Friedberg (DE); Bongardt, Thomas, 86179 Augsburg (DE)
(74) Vertreter: Patentanwälte Funk & Böss GbR

(57) **Zusammenfassung**

Die Erfindung betrifft eine mobile Messvorrichtung (1), aufweisend ein Trägerfahrzeug (9), das Räder (11) und Antriebe (16) zum Bewegen der Räder (11) aufweist, einen an dem Trägerfahrzeug (9) befestigten, mehrere Achsen aufweisenden Roboterarm (M) eines Messroboters (R) und einen an dem Trägerfahrzeug (9) befestigten Messkörper (K) zum Kalibrieren des Messroboters (R).

## Beschreibung

Die Erfindung betrifft eine mobile Messvorrichtung.

Die DE 299 11 187 U1 offenbart eine Messstation mit einem Messroboter, der einen mehrere Achsen umfassenden Roboterarm aufweist, an dessen Roboterhand eine optische Messvorrichtung, beispielsweise ein 3D-Sensor, befestigt ist. Für die Kalibrierung des Messroboters ist ein Messkörper mit einer Trägerplatte vorgesehen, die mittels eines Gestells ortsfest positioniert ist. Der fest positionierte Messkörper ist bezüglich eines Koordinatensystems der Messstation vermessen, so dass Messmarken des Messkörpers eine bekannte und sehr genau bestimmbare Position in diesem Koordinatensystem aufweisen. Um den Messroboter zu kalibrieren, fährt dieser die Messmarken mit der optischen Messvorrichtung an.

Damit die Position des Messkörpers möglichst keinen Änderungen durch Temperaturschwankungen unterliegt und ein möglichst exaktes Kalibrieren des Messroboters ermöglicht wird, sind bei einer konventionellen Messstation der Roboterarm und der Messkörper auf einem starren Fundament befestigt.

Die W02008/122538 A1 offenbart ein omnidirektionales Fahrzeug mit einem Grundkörper und mit vier omnidirektionalen Rädern, die jeweils von einem Antrieb angetrieben werden. Auf dem Grundkörper des omnidirektionalen Fahrzeugs ist ein Industrieroboter befestigt, dessen Steuerrechner auch die Antriebe der omnidirektionalen Räder ansteuert.

Aufgabe der Erfindung ist es, eine flexiblere Messvorrichtung mit einem Messroboter und einem Messkörper zum Kalibrieren des Messroboters anzugeben.

Die Aufgabe der Erfindung wird gelöst durch eine mobile Messvorrichtung, aufweisend ein Trägerfahrzeug, das Räder und Antriebe zum Bewegen der Räder aufweist, einen an dem Trägerfahrzeug befestigten, mehrere Achsen aufweisenden Roboterarm eines Messroboters und einen an dem Trägerfahrzeug befestigten Messkörper zum Kalibrieren des Messroboters.

Die erfindungsgemäße Messvorrichtung umfasst demnach den Roboterarm mit mehreren Achsen. Der Roboterarm und seine Steuerungsvorrichtung ergeben den Messroboter. Unter Roboter versteht man im Allgemeinen eine Handhabungsmaschine, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar ist. Roboter weisen im Wesentlichen den Roboterarm mit mehreren Achsen und gegebenenfalls Hebeln auf, die von Antrieben bewegt werden. Die Antriebe sind z.B. elektrische Antriebe.

Messroboter als solche sind ebenfalls bekannt. Sie sind insbesondere vorgesehen, Werkstücke insbesondere in automatisierter Weise zu vermessen. Dazu ist z.B. an einem Flansch des Roboterarms eine entsprechende Vorrichtung befestigt, die der Messroboter z.B. an vorgegebene Punkte des Werkstücks bewegt. Die entsprechende Vorrichtung ist beispielsweise eine optische Vorrichtung, wie z.B. eine 3D-Kamera.

Um den Messroboter zu kalibrieren, wird der Messkörper verwendet. Messkörper als solche sind ebenfalls dem Fachmann z.B. aus der in der Einleitung genannten DE 299 11 187 U1 bekannt. Der Messkörper umfasst z.B. Markierungen, die der Messroboter während eines Kalibriervorgangs anfährt, um z.B. sein Koordinatensystem mit einem Koordinatensystem des Messorts abzugleichen.

Erfindungsgemäß ist die Messvorrichtung mobil ausgeführt. Dies wird erfindungsgemäß realisiert, indem zumindest der Roboterarm und der Messkörper an dem Trägerfahrzeug befestigt sind. Somit ist es möglich, dass die erfindungsgemäße Messvorrichtung von einem Ort zu einem anderen, insbesondere zum Messort gefahren werden kann. Da außerdem die Räder des Trägerfahrzeugs mittels Antrieben bewegt werden können, kann das Trägerfahrzeug selber an den gewünschten Messort fahren.

Da der Messroboter, zumindest dessen Roboterarm, und der Messkörper fest am Trägerfahrzeug befestigt sind, ist es z.B. möglich, den Messroboter schon vor dem Transport zum Messort mit für die Messung benötigter Software zu konfigurieren und zu testen, wodurch die erfindungsgemäße mobile Messvorrichtung am Einsatzort, d.h. am gewünschten Messort schneller in Betrieb genommen werden kann. Aufgrund der mobilen Ausführung ist es auch möglich, den Messroboter mit Messkörper von dem gegenwärtigen Messort zu entfernen und mittels des Trägerfahrzeugs an einen anderen Messort zu fahren.

Um die Flexibilität des Trägerfahrzeugs und somit der erfindungsgemäßen mobilen Messvorrichtung zu erhöhen, ist nach einer Variante wenigstens eines der Räder als ein omnidirektionales Rad ausgebildet. Unter einem omnidirektionalem Rad, das auch als Allseitenrad oder als so genanntes Mecanum-Rad bezeichnet wird, versteht man ein Rad, das sich in jeder Richtung bewegen kann. Ein omnidirektionales Rad weist im Allgemeinen Rollkörper auf, deren Oberflächen z.B. ballig oder tonnenförmig ausgebildet sind und deren Rollkörperachsen schräg, meist im Winkel von 45° zur Achse des Rades, angebracht sind.

Um die Flexibilität des Trägerfahrzeugs zu erhöhen, sind nach einer Ausführungsform der erfindungsgemäßen mobilen Messvorrichtung alle Räder des Trägerfahrzeugs als omnidirektionale Räder ausgebildet.

Nach einer bevorzugten Variante der erfindungsgemäßen Messvorrichtung sind nicht nur der Roboterarm und der Messkörper am Trägerfahrzeug befestigt, sondern auch eine Steuerungsvorrichtung des Messroboters zum Bewegen der Achsen des Messroboterarms. Somit ist es möglich, den gesamten Messroboter mit Messkörper mittels des Trägerfahrzeugs von einem Ort zum anderen zu fahren.

Gemäß einer weiteren bevorzugten Ausführungsform der erfindungemäßen mobilen Messvorrichtung weist diese eine Trägerplatte auf, die an dem Trägerfahrzeug befestigt ist und an der zumindest der Roboterarm und der Messkörper befestigt sind. Der Roboterarm und der Messkörper sind demnach gemäß dieser Variante an einer gemeinsamen Trägerplatte befestigt.

Die Trägerplatte ist vorzugsweise aus einem temperaturstabilen Material gefertigt. Ein geeignetes Material ist z.B. Beton. Stahlbeton oder ein Polymerbeton sind auch geeignet.

Für die Variante der mobilen Messvorrichtung, deren Trägerfahrzeug die gemeinsame Trägerplatte für den Roboterarm und den Messkörper aufweist, kann es vorgesehen sein, dass das Trägerfahrzeug eine Absenkvorrichtung aufweist, mittels der die Trägerplatte mit an ihr befestigtem Roboterarm und an ihr befestigtem Messkörper relativ zu einem Grundkörper des Trägerfahrzeugs absenkbar ist. Dann ist es möglich, dass am Einsatzort des Messroboters der Roboterarm und der Messkörper gemeinsam mit der Trägerplatte und mittels der Absenkvorrichtung beispielsweise auf den Boden abgesenkt werden, wodurch die Stabilität der Messvorrichtung am Einsatzort erhöht wird. Um die Stabilität der erfindungsgemäßen Messvorrichtung am Messort weiter zu erhöhen, weist diese nach einer Variante eine Fixiervorrichtung auf, mittels der die Trägerplatte, wenn abgesenkt, am Boden fixierbar ist.

Die erfindungsgemäße mobile Messvorrichtung stellt demnach eine Plattform zur Verfügung, die einfach umgezogen werden kann. Die Basiskonfiguration kann hierbei jeweils beibehalten werden (Grundeinrichtung Software für prinzipielle Einsatzbereitschaft des Systems sowie Temperaturkompensation).

Je nach Ausführungsform der erfindungsgemäßen mobilen Messvorrichtung wird eine mobile Messzelle bereitgestellt, deren Roboterarm und deren Messkörper, der z.B. die Form einer Kugel aufweist, und gegebenenfalls auch die Steuerungsvorrichtung des Messroboters auf einer mobilen Plattform (z.B. einem omnidirektionalen Trägerfahrzeug) aufgebaut sind, um somit einen hochflexiblen Einsatz zu ermöglichen.

Ein Ausführungsbeispiel der Erfindung ist exemplarisch in der beigefügten schematischen Figur dargestellt, die eine mobile Messvorrichtung mit einem Messroboter zeigt.

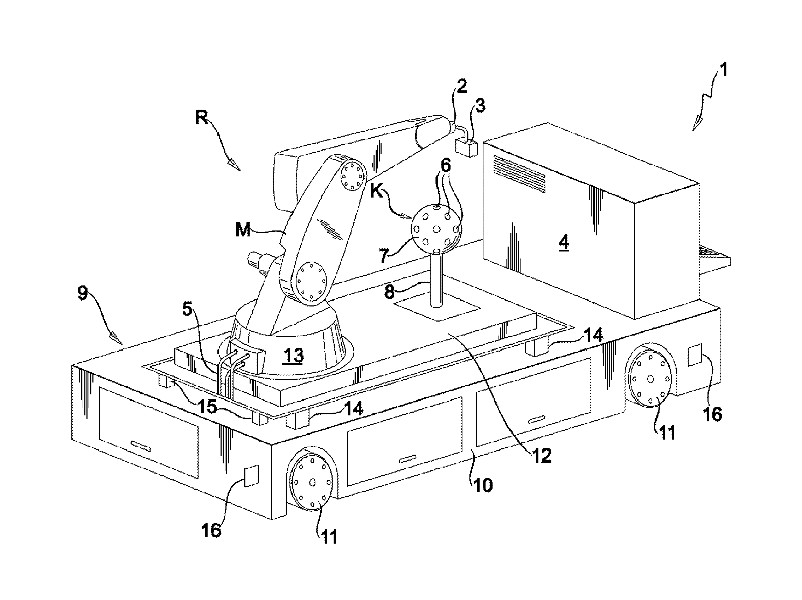

Die Figur zeigt eine mobile Messvorrichtung 1, die zur Vermessung eines nicht näher dargestellten Werkstücks vorgesehen ist. Das Werkstück ist z.B. eine Fahrzeugkarosserie und/oder deren Bauteile. Das Werkstück wird z.B. in allgemein bekannter Weise von einer nicht näher gezeigten Halterungsvorrichtung gehalten.

Mittels der mobilen Messvorrichtung 1 kann das Werkstück vermessen werden. Die mobile Messvorrichtung 1 weist einen Messroboter R und einen Messkörper K zum Kalibrieren des Messroboters R auf. Der Messroboter R weist einen Roboterarm M mit einer Kinematik für Bewegungen in beispielsweise sechs Freiheitsgraden auf. Der Roboterarm M weist in allgemein bekannter Weise beispielsweise Gelenke, Hebel, z.B. sechs Bewegungsachsen und einen Flansch 2 auf, an dem im Falle des vorliegenden Ausführungsbeispiels eine dem Fachmann im Prinzip bekannte optische Vermessungseinrichtung 3 angeordnet ist. Die optische Vermessungseinrichtung 3 ist z.B. als ein 3D-Sensor ausgebildet.

Der Messroboter R umfasst ferner eine als Steuerrechner 4 ausgebildete Steuerungsvorrichtung, der im Falle des vorliegenden Ausführungsbeispiels mit nicht näher dargestellten elektrischen Antrieben des Roboterarms M über elektrische Leitungen 5 verbunden ist. Die elektrischen Antriebe sind vorgesehen, die einzelnen Achsen des Roboterarms M gemäß einem auf dem Steuerrechner 4 laufenden Rechnerprogramm zu bewegen, wie dies im Prinzip dem Fachmann geläufig ist.

Um das Werkstück vermessen zu können, sind z.B. an diesem mehrere definierte Messpunkte angeordnet, die für die Werkstückgeometrie relevant sind und eine insbesondere bestimmte räumliche Position aufweisen. Bei den Messpunkten kann es sich auch um markante Stellen des Werkstücks handeln, wie beispielsweise Bohrungen oder Kanten an bestimmten Stellen des z.B. als Fahrzeugkarosserie ausgebildeten Werkstücks.

Der Messroboter R führt gegebenenfalls die Vermessungen unter Bezug auf sein Basis-Koordinatensystem oder auf einem Koordinatensystem der mobilen Messvorrichtung 1 durch. Die hierauf bezogenen Koordinaten der Messpunkte werden dann z.B. in Koordinaten des Werkstück-Koordinatensystemes umgerechnet und transformiert.

Die mobile Messvorrichtung 1 umfasst, wie bereits erwähnt, den Messkörper K. Der Messkörper K weist im Falle des vorliegenden Ausführungsbeispiels einen mit mehreren Kalibriermarken 6 versehenen insbesondere kugelförmig ausgeführten Träger 7 auf, der an einem Sockel 8 befestigt ist. Die Kalibriermarken 6 weisen z.B. eine kreisrunde Form oder Kontur auf, wobei die Positionen der Kalibriermarken 6 bekannt sind.

Im Falle des vorliegenden Ausführungsbeispiels weist die mobile Messvorrichtung 1 ein Trägerfahrzeug 9 auf, das einen Grundkörper 10 aufweist, an dem im Falle des vorliegenden Ausführungsbeispiels vier Räder 11 zumindest indirekt befestigt sind.

Im Falle des vorliegenden Ausführungsbeispiels sind alle Räder 11 des Trägerfahrzeugs 9 dem Fachmann im Wesentlichen bekannte omnidirektionale Räder 11. Die Räder 11 weisen z.B. jeweils zwei starr miteinander verbundene Radscheiben auf, zwischen denen mehrere Rollkörper bezüglich ihrer Längsachsen drehbar gelagert sind. Die beiden Radscheiben können bezüglich einer Drehachse drehbar gelagert sein und mittels eines Antriebs 16 derart angetrieben werden, dass sich die beiden Radscheiben bezüglich der Drehachse drehen. Die Rollkörper können gleichmäßig zueinander beabstandet und derart an den Radscheiben gelagert sein, dass ihre Rollflächen über den Umfang der Radscheiben herausragen. Außerdem können die Rollkörper derart an den Radscheiben gelagert sein, dass ihre Längsachsen mit der Drehachse einen Winkel von beispielsweise 45° aufweisen.

Somit ist es möglich, dass im Falle des vorliegenden Ausführungsbeispiels das Trägerfahrzeug 9 im Wesentlichen in alle Richtungen mittels der die Räder 11 antreibenden Antriebe 16 bewegt werden kann.

Im Falle des vorliegenden Ausführungsbeispiels ist der Steuerrechner 4 des Messroboters R am Grundkörper 10, der z.B. rahmenförmig ausgeführt ist, befestigt.

Das Trägerfahrzeug 9 weist im Falle des vorliegenden Ausführungsbeispiels eine Trägerplatte 12 auf, die insbesondere aus einem zumindest weitgehend temperaturstabilen Material gefertigt ist. Die Trägerplatte 12 ist beispielsweise aus Beton gefertigt. Andere geeignete Materialien für die Trägerplatte 12 sind z.B. Stahlbeton oder ein Polymerbeton.

Die Trägerplatte 12 ist vorgesehen, dass an ihr der Roboterarm M und der Messkörper K befestigt sind. Im Falle des vorliegenden Ausführungsbeispiels ist der Messkörper K mit seinem Sockel 8 und der Roboterarm M ebenfalls mit seinem Sockel 13 an der Trägerplatte 12 in einer zueinander bekannten Position befestigt, indem z.B. der Sockel 8 des Messkörpers K und der Sockel 13 des Roboterarms M mit der Trägerplatte 12 verschraubt sind.

Im Falle des vorliegenden Ausführungsbeispiels kann die Trägerplatte 12 mit dem Roboterarm M und dem Messkörper K mittels einer Absenkvorrichtung, z.B. einer Hubvorrichtung 14 zwischen einer in der Figur dargestellten erhöhten Position und einer abgesenkten Position hin und her bewegt werden. Befindet sich die Trägerplatte 12 in ihrer abgesenkten Position, dann kann die Trägervorrichtung 12 z.B. mit an ihr befestigten Fixiervorrichtungen 15 am Boden z.B. des vorgesehenen Messortes fixiert werden. Befindet sich die Trägervorrichtung 12 in ihrer erhöhten Position, dann ist das Trägerfahrzeug 1 fahrbereit.

## Patentansprüche

1. Mobile Messvorrichtung, aufweisend ein Trägerfahrzeug (9), das Räder (11) und Antriebe (16) zum Bewegen der Räder (11) aufweist, einen an dem Trägerfahrzeug (9) befestigten, mehrere Achsen aufweisenden Roboterarm (M) eines Messroboters (R) und einen an dem Trägerfahrzeug (9) befestigten Messkörper (K) zum Kalibrieren des Messroboters (R).

2. Messvorrichtung nach Anspruch 1, bei dem wenigstens eines der Räder als ein omnidirektionales Rad (11) ausgebildet ist.

3. Messvorrichtung nach Anspruch 1 oder 2, bei dem alle Räder als omnidirektionale Räder (11) ausgebildet sind.

4. Messvorrichtung nach einem der Ansprüche 1 bis 3, bei der eine Steuerungsvorrichtung (4) des Messroboters (R) zum Bewegen der Achsen des Roboterarms (M) am Trägerfahrzeug (9) angeordnet ist.

5. Messvorrichtung nach einem der Ansprüche 1 bis 4, aufweisend eine Trägerplatte (12), die an einem Grundkörper (10) des Trägerfahrzeugs (9) befestigt ist und an der zumindest der Roboterarm (M) und der Messkörper (K) befestigt sind.

6. Messvorrichtung nach Anspruch 5, aufweisend eine Absenkvorrichtung (14), mittels der die Trägerplatte (12) mit an ihr befestigtem Roboterarm (M) und an ihr befestigtem Messkörper (K) relativ zum Grundkörper (10) absenkbar ist.

7. Messvorrichtung nach Anspruch 6, aufweisend eine Fixiervorrichtung (15), mittels der die Trägerplatte (12), wenn abgesenkt, am Boden fixierbar ist.

8. Messvorrichtung nach einem der Ansprüche 5 bis 7, deren Trägerplatte (12) aus einem temperaturstabilen Material gefertigt ist.

9. Messvorrichtung nach einem der Ansprüche 5 bis 8, deren Trägerplatte (12) aus Beton, Stahlbeton oder Polymerbeton gefertigt ist.
